# EUROPÄISCHE PATENTSCHRIFT

(11) **EP 3 013 496 B1**
(45) Veröffentlichungstag und Bekanntmachung des Hinweises auf die Patenterteilung: **30.05.2018**
(21) Anmeldenummer: 14752653.7
(22) Anmeldetag: 24.06.2014
(51) Int. Cl.: B21F 27/02, E02D 17/20, E01F 7/04

(54) **MASCHENNETZ FÜR DIE FELS- UND FELSBÖSCHUNGSSICHERUNG**
NET FOR SECURING ROCKS AND ROCK SLOPES
FILET À MAILLES POUR LA PROTECTION DES ROCHERS ET TALUS ROCHEUX

(30) Priorität: 27.06.2013 DE 202013102795 U; 26.03.2014 DE 202014101406 U
(43) Veröffentlichungstag der Anmeldung: 04.05.2016
(73) Patentinhaber: Pfeifer Isofer AG, 8934 Knonau (CH)
(72) Erfinder: FULDE, Marcel, 8810 Hogen (CH)
(74) Vertreter: Sroka, Peter-Christian
(86) Internationale Anmeldenummer: PCT/IB2014/001163
(87) Internationale Veröffentlichungsnummer: WO 2014/207535

(56) Entgegenhaltungen:
- WO-A1-2005/120744
- CN-U- 202 023 196

## Beschreibung

Die Erfindung betrifft ein Maschennetz als Fangnetz für die Fels- und Felsböschungssicherung sowie Steinschlag, Murgang und ähnliche Naturgefahren.

Bei Maschennetzen als Schutz- bzw. Sicherungsnetzen zur Böschungs- und Felssicherung sowie zum Schutz gegen Steinschlag und ähnliche Naturgefahren sind neben der Geflechtstruktur insbesondere die Materialeigenschaften der verwendeten Materialien sowohl hinsichtlich der erreichbaren Lastaufnahme als auch hinsichtlich der Riss- oder Bruchfestigkeit der Materialstränge von wesentlicher Bedeutung.

In der EP 0 979 329 B2 ist ein Drahtgeflecht für einen Steinschlagschutz oder für die Sicherung einer Erdoberflächenschicht beschrieben. Das Drahtgeflecht besteht vorzugsweise aus hochfesten Stahldrähten, die zu Drahtseilen verseilt sind. Das Drahtgeflecht ist aus einem viereckigen Diagonalgeflecht gebildet, wobei die einzelnen Maschen jeweils ein Rhomboid bilden. Die einzelnen Drahtseile verlaufen im Wesentlichen zick-zack-förmig mit einem bevorzugten Steigungswinkel von annähernd 30°, was, da die einzelnen Drähte sich in den Maschenkreuzungspunkten umschlingen, zu einer Umlenkung der einzelnen Drähte in der Größenordnung von 120° führt was insbesondere hinsichtlich der Riss- bzw. Bruchfestigkeit nachteilig ist.

Bei einem in der DE 23 27 005 B2 beschriebenen Drahtgeflecht mit ebenfalls im Wesentlichen rhomboidförmigen Maschen treffen sich in den Maschenkreuzungspunkten jeweils zwei Drähte mit einem Steigungswinkel von etwa 30°, von denen der eine Draht mit einem Umlenkwinkel im Bereich von ca. 120° durch eine von dem zweiten Draht gebildete Öse hindurchgezogen ist, der einen sehr nachteiligen, gegen 240° - 270° tendierenden Knickwinkel hat. Das Maschendraht-Viereckgeflecht kann aus jedem beliebigen plastisch verformbaren Material bestehen, insbesondere aus blankem oder beschichtetem Stahl- oder Aluminiumdraht. Weitere Sicherungsmaschennetze sind von den Druckschriften WO2005/120744A1 und US5795835A bekannt, wobei die

Maschennetze knotenfrei miteinander zusammengefasste verzwirnte Multi- und/oder Mono-Filament-Garne umfassen. Der Erfindung liegt die Aufgabe zugrunde, ein Maschennetz als Sicherungsnetz oder Fangnetz für die Fels- und Felsböschungssicherung sowie Steinschlag, Murgang oder ähnliche Naturgefahren mit gegenüber den bekannten für diese Zwecke benutzten Maschennetzen verbesserten Eigenschaften zu schaffen.

Zur Lösung dieser Aufgabe wird ein Maschennetz vorgeschlagen, das dadurch gekennzeitchnet ist, dass es Filament-Garne aus der Gruppe von High Performance Polyethylen-Fasern, nämlich UHMW-PE-Fasern mit einer Filamentzugfestigkeit von 3000 N/mm² bis 4000 N/mm² enthält.

Die erfindungsgemäße Verwendung von Filament-Garnen, insbesondere in Form von Mono- und/oder Multifilament-Garnen führt zu einer erheblichen Gewichtsreduktion und eine bessere Drapierbarkeit im Vergleich zu Stahldrahtgeflechten.

Bei den erfindungsgemäß verwendeten Polyethylenfasern UHMWPE (= Ultra high molecular weight Polyethylen) handelt es sich um einen ultrahochmolekularen, teilkristallinen thermoplastischen Werkstoff mit einer mittleren Molmasse von bis zu 5.000.000 g/mol und einer Dichte von 0,93 - 0,94 g/cm³. Dieser Werkstoff eignet sich insbesondere für Maschennetze für Fels- und Felsböschungssicherungen aufgrund seiner hervorragenden Verschleiß- und Abriebfestigkeit, einer hohen Schlag- und Kerbschlagzähigkeit (auch bei Temperaturen bis zu -150 °C) einer geringen Feuchtigkeitsaufnahme und einer hohen Beständigkeit gegen Chemikalien. Er ist weiterhin antiadhäsiv und verhindert Anbackungen.

Das Maschennetz enthält vorzugsweise verzwirnte Garne mit Titern von 1200 bis 1800 dtex, vorzugsweise 1450 bis 1550 dtex, insbesondere 1500 dtex.

Zu Abrasionsschutz- und UV-Schutzzwecken ist vorzugsweise eine entsprechende Beschichtung vorgesehen.

Das erfindungsgemäße Maschennetz kennzeichnet sich in vorteilhafter Weise dadurch aus, dass es als Sicherungsnetz für die Böschungssicherung, Felsböschungssicherung und für absturzgefährdete Felspartien verwendet werden kann.

Das Maschennetz enthält in bevorzugter Weise Schutzelemente zur faserschonenden Befestigung an den zu sichernden Fels- und Böschungsflächen mittels Spannelementen und/oder Stabankern.

Um eine knotenfreie Struktur des Maschennetzes, bei dem sich jeweils zwei Materialstränge in Maschenkreuzungspunkten treffen, zu erreichen, ist gemäß Anspruch 5 bei einer weiteren bevorzugten Ausführungsform der Erfindung vorgesehen, dass
a) jeder Materialstrang aus mindestens zwei, vorzugsweise bis zu sechs Einzelsträngen besteht,
b) mindestens ein Einzelstrang jedes Materialstranges die Maschenkreuzungspunkte ohne Richtungsänderung durchläuft, während
c) mindestens ein Einzelstrang jedes Materialstranges im Bereich des Maschenkreuzungspunktes umgelenkt und mit dem den vorgesehenen Maschenkreuzungspunkt ohne Richtungsänderung durchlaufenden Einzelstrang des anderen Materialstranges zusammengeführt wird.

Bei einem Maschennetz, bei dem die Materialstränge sich im Bereich von gegenüberliegenden Kreuzungspunkten einerseits unter einem Winkel α von beispielsweise 60° und andererseits unter einem Winkel β von beispielsweise 120° treffen, durchläuft mindestens ein Einzelstrang als durchgehender Strang diesen Kreuzungspunkt ohne Umlenkung, d.h. mit einem materialschonenden, gegen 0° tendierenden Knickwinkel, während mindestens ein weiterer Einzelstrang im wesentlichen nur unter einem Winkel von etwa 30° umgelenkt wird. Auf diese Weise wird einerseits die Lastaufnahme des Maschennetzes erhöht und andererseits auch eine erhöhte Bruch- bzw. Rissfestigkeit der Materialstränge gewährleistet

Das erfindungsgemäße Maschennetz zeichnet sich insbesondere durch eine hohe Elastizität bei großer Formstabilität aus, wobei aufgrund der durchgängigen Materialstränge eine große Lastaufnahme gewährleistet ist.

Gemäß einer weiteren bevorzugten Ausführungsform der Erfindung wird ein einen Kreuzungspunkt ohne Richtungsänderung durchlaufender Einzelstrang im Bereich eines folgenden Kreuzungspunktes umgelenkt und trifft sich mit einem Einzelstrang, der in einem vorhergehenden Kreuzungspunkt seine Richtung ändernd umgelenkt worden ist.

Jeder Einzelstrang besteht vorzugsweise aus mehreren Einzelfilamenten bzw. Einzelfäden, die vorzugsweise verseilt, geflochten, verzwirnt oder weitgehend parallel zueinander gelegt sind.

Jeder Materialstrang besteht vorzugsweise aus mindestens zwei Einzelsträngen, die vorzugsweise verseilt, geflochten, verzwirnt oder weitgehend parallel zueinander gelegt sind.

Die Einzelstränge und damit die Materialstränge enthalten insbesondere Filamente aus textilem Material, Kunststoff- und/oder Natur- sowie Mineralfasern.

Die bevorzugte Maschenstruktur wird im Folgenden anhand der Zeichnung näher beschrieben:
Figur 1 zeigt eine Draufsicht des erfindungsgemäßen Maschennetzes;
Figur 2 zeigt in vergrößerter Darstellung den in Figur 1 mit dem Bezugszeichen I bezeichneten Ausschnitt im Bereich eines Maschenkreuzungspunktes.

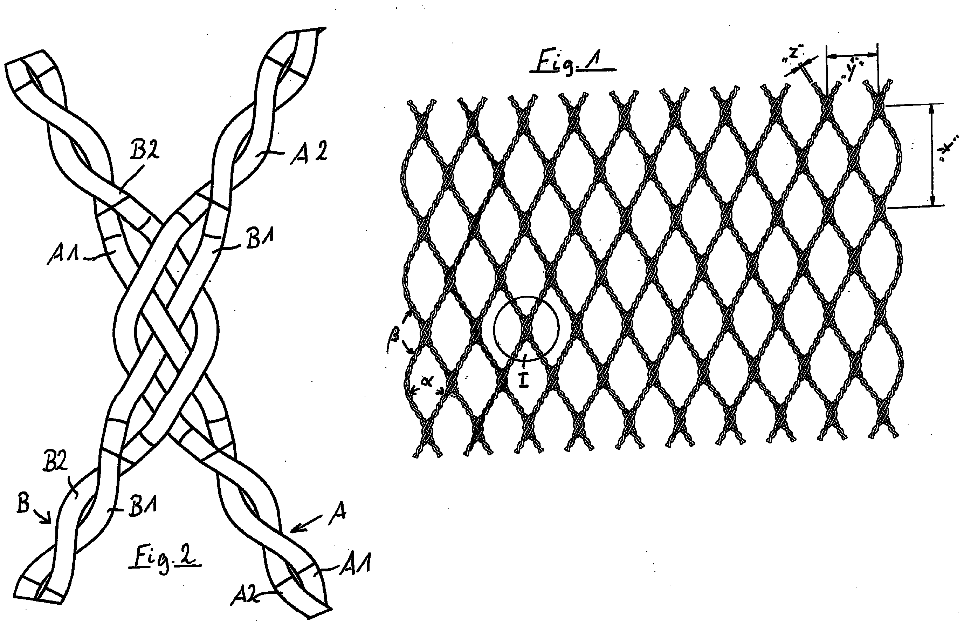

Figur 2 zeigt zwei Materialstränge A und B, die als Ausgangsmaterial mindestens zwei miteinander verseilte oder verzwirnte Einzelstränge A1, A2 bzw. B1, B2 enthalten.

Bein einem Materialstrang mit zwei Einzelsträngen A1 und B1 durchlaufen die beiden Einzelstränge A1 und B1 den Kreuzungspunkt I ohne Richtungsänderung. Die beiden Einzelstränge A2 und B2 werden im Bereich dieses Kreuzungspunktes umgelenkt und hinter diesem Kreuzungspunkt mit dem einen vorangegangenen Kreuzungspunkt ohne Richtungsänderung durchlaufenden Einzelstrang A1 bzw. B1 zusammen geführt.

Jeder Materialstrang A und B enthält vorzugsweise mehr als zwei Einzelstränge, vorzugsweise bis zu sechs Einzelstränge, wobei vorzugsweise jeweils mindestens ein Einzelstrang eines Materialstranges den Kreuzungspunkt ohne Richtungsänderung durchläuft, während mindestens ein Einzelstrang eines Materialstranges im Bereich des Kreuzungspunktes umgelenkt wird.

Erfindungsgemäß kann jeder einen Kreuzungspunkt ohne Richtungsänderung durchlaufender Einzelstrang im Bereich des nächstfolgenden Kreuzungspunktes oder erst in einem darauf folgenden Kreuzungspunkt umgelenkt werden.

Die Materialstränge A und B treffen sich im Bereich von gegenüberliegenden Kreuzungspunkten im Ruhezustand unter einem Winkel α von 15° bis 90°, vorzugsweise 30° bis 70°.

Bei sich im Bereich eines Kreuzungspunktes beispielsweise unter einem Winkel α von etwa 60° treffenden Materialsträngen liegt der Umlenkwinkel des einen Stranges im Bereich von α/2 = 30°, woraus eine geringe, materialschonende Knickbeanspruchung der Material- bzw. Einzelstränge resultiert.

Jeder Materialstrang A bzw. B kann Einzelstränge und auch Einzelfäden aus textilem Material, Kunststoff und/oder Natur- sowie Mineralfasern, insbesondere Basaltfasern, und aus Metall, insbesondere Stahl oder Aluminium bestehende Einzeldrähte, Drahtbündel, Drahtlitze oder Drahtseile enthalten. Jeder Einzelstrang kann mehrere miteinander verseilte, geflochtene, verzwirnte oder weitgehend parallel zueinander gelegte Filamente und/oder Drähte enthalten.

Gemäß Figur 1 liegen die Kreuzungspunkte in der einen Richtung in einem Abstand "x" in der Größenordnung von 130 mm - 160 mm, vorzugsweise 145 mm, und in der anderen Richtung in einem Abstand "y" von 60 mm - 80 mm, vorzugsweise 70 mm. Der mittlere Durchmesser jedes Einzelstranges beträgt vorzugsweise 2,5 mm - 4 mm, insbesondere 3 mm, wobei anwendungsbedingt andere Dimensionen möglich sind.
Die Herstellung des Maschennetzes kann z.B. in einem Verzweigungsflechter erfolgen.
Die Einzelstränge und die Materialstränge, d.h. das Netz können durch eine Ausrüstung stabilisiert werden. So können z.B. Thermoplaste zur Stabilisierung der Maschenkreuzungspunkte oder/und der Netzenden eingesetzt werden.

Gemäß einer bevorzugten Ausführungsform der Erfindung enthält das Maschennetz Maschenkreuzungspunkte, die miteinander verklebt, verschweißt und/oder verklammert sind.

Die Geflechtstruktur des Maschennetzes ist vorzugsweise geraschelt.

## Patentansprüche

1. Maschennetz als Sicherungs- bzw. Fangnetz für Fels- bzw. Felsböschungssicherung, Steinschlag, Murgang oder ähnlichen Naturgefahren, wobei es knotenfrei miteinander zusammengefasste verzwirnte Multi- und/oder Mono-Filament-Garne als Hochmodul-Polymerfasern aus der Gruppe von High-Performance-Polyethylen-Fasern, nämlich UHMW-PE-Fasern, mit Garntitern von 1200 bis 1800 dtex und einer Filamentzugfestigkeit von 3000 bis 4000 N/mm² enthält, und wobei es eine Zugfestigkeit von >150 kN/m hat.

2. Maschennetz nach Anspruch 1, **dadurch gekennzeichnet, dass** die sich kreuzenden Multi- und/oder Mono-Filament-Garne miteinander verwoben sind.

3. Maschennetz nach Anspruch 1 oder 2, **dadurch gekennzeichnet, dass** es zu Abrasionsschutz- und UV-Schutzzwecken eine Beschichtung enthält.

4. Maschennetz, bei dem sich jeweils zwei Materialstränge in Maschenkreuzungspunkten treffen, nach Anspruch 1 oder 2, **dadurch gekennzeichnet, dass**
i. jeder Materialstrang (A; B) aus bis zu sechs Einzelsträngen (A1, A2 bzw. B1, B2) besteht,
ii. mindestens ein Einzelstrang (A1 bzw. B1) jedes Materialstranges (A bzw. B) die Maschenkreuzungspunkte ohne Richtungsänderung durchläuft,
iii. während mindestens ein Einzelstrang (A2 bzw. B2) jedes Materialstranges (A bzw. B) im Bereich dieses Kreuzungspunktes umgelenkt und mit einem einen vorhergehenden Kreuzungspunkt ohne Richtungsänderung durchlaufenden Einzelstrang (B1 bzw. A1) des anderen Materialstranges (B bzw. A) zusammengeführt ist.

5. Maschennetz nach Anspruch 4, **dadurch gekennzeichnet, dass** im Bereich eines jeweils folgenden Kreuzungspunkte der den ersten Kreuzungspunkt ohne Richtungsänderung durchlaufende Einzelstrang (A1 bzw. B1) umgelenkt wird und sich mit einem Einzelstrang trifft, der im Bereich eines der vorhergehenden Kreuzungspunkte seine Richtung ändernd umgelenkt worden ist.

6. Maschennetz nach Anspruch 1 oder 4, **dadurch gekennzeichnet, dass** die Materialstränge (A, B) sich im Bereich der Kreuzungspunkte im Ruhezustand unter einem Winkel α von 15° bis 90° kreuzen.

7. Maschennetz nach Anspruch 4, **dadurch gekennzeichnet, dass** jeder Einzelstrang (A1, A2, B1, B2) aus mehreren Einzelfäden besteht, die insbesondere verseilt, geflochten, verzwirnt oder weitgehend parallel zueinander gelegt sind.

8. Maschennetz nach Anspruch 4, **dadurch gekennzeichnet, dass** die Einzelstränge (A1, A2, B1, B2) Drähte, Drahtbündel, Drahtlitzen oder Drahtseile aus Stahl oder Aluminium enthalten.

9. Maschennetz nach Anspruch 4, **dadurch gekennzeichnet, dass** es Schutzelemente zur faserschonenden Befestigung an zu sichernden Böschungsflächen mittels Spannelementen und/oder Stabankern enthält.

10. Maschennetz nach Anspruch 4, **dadurch gekennzeichnet, dass** es Maschenkreuzungspunkte enthält, die miteinander verklebt sind.

11. Maschennetz nach Anspruch 4, **dadurch gekennzeichnet, dass** es eine geraschelte Geflechtstruktur hat.

## Claims

1. Mesh network as safety and catching net, respectively, for securing rocks and rock slopes, rock fall, debris flow or similar natural hazards, the mesh network containing combined twisted multi- and or monofilament yarns which are combined together free of knots and which contain high performance polyethylene fibers from the group of high module polymer fibers, namely UHMW-PE fibers having yarn titers of 1200 dtex - 1800 dtex and a filament tensile strength of 3000N/mm² to 4000N/mm², wherein the net has a net tensile strength >150KN/m.

2. Mesh network according to claim 1, **characterized in that** the multi- and/or monofilament yarns, which cross each other are interweaved

3. Mesh network according to claim 1 or 2, **characterized in that** it contains a coating for abrasion and UV-protective purposes.

4. Mesh network wherein two material ropes each meet at a mesh crossing point, respectively according to claim 1 or 2, **characterized in that**
i. each material rope (A; B, respectively) is comprised of up to six individual ropes (A1, A2 and B1, B2, respectively),
ii. at least one individual rope (A1 and B1, respectively) of each material rope (A and B, respectively) passes through the mesh crossing points without directional change,
iii. while at least one individual rope (A2 or B2, respectively) of each material rope (A or B, respectively) is deflected at this crossing point and is brought together with an individual rope (B1 or A1, respectively) of the other material rope (B or A, respectively) passing through this crossing point without directional change.

5. Mesh network according to claim 4, **characterized in that** the individual rope (A1 or B1, respectively) passing a first crossing point without directional change is deflected at each following crossing point and meets with an individual rope which has been deflected at a preceding crossing point so as to change its direction.

6. Mesh network according to claim 1 or 4, **characterized in that** in the non-operated state the material ropes (A, B) of the at crossing points cross each other at an angle of 15° to 90°.

7. Mesh network according to claim 4, **characterized in that** each individual rope (A1, A2, B1, B2) consists of a plurality of individual filaments which are stranded, braided, twisted or largely are laid in parallel to each other.

8. Mesh network according to claim 4, **characterized in that** the individual ropes (A1, A2, B1, B2) contain wires, wire bundles, wire strands or wire cords made of steel or aluminium.

9. Mesh network according to claim 4, **characterized in that** it contains protective elements for the fiber-preserving fastening to slope areas, which have to be secured, by means of claimping elements and/or rod anchors.

10. Mesh network according to claim 4, **characterized, in that** it contains mesh crossing points which are glued together.

11. Mesh network according to claim 4, **characterized, in that** it has a knitted netting meshwork structure.

## Revendications

1. Réseau maillé comme réseau de protection et de garde pour des mesures de sécurité pour rochers et pentes rocheuses, chutes de pierres, lave torrentielle ou dangers naturels similaires, contenant des fils retordus des mono et/ou multi filament fibres et interconnectés sans noeuds comme polymère-fibres à haut module de la groupe des fibres de haute puissance, à savoir UHMW-PE polyéthylène-fibres, avec des titres de 1200 jusque à 1800 dtex et une résistance à la traction des filaments de 3000 jusque à 4000N/mm², et à condition que le réseau a une résistance à la traction de >150KN/m.

2. Réseau maillé selon la revendication 1, **caractérisé en ce, que** les fils entrecroisés des mono et/ou multi filaments sont tissés ensemble

3. Réseau maillé selon revendication 1 ou 2, **caractérisé en ce, qu'**il contient un revêtement anti-abrasif et anti-UV rayonnes.

4. Réseau maillé contenant des cordes de matériau, deux de ces cordes se croisent à chaque point de croisement du réseau maillé, respectivement, selon la revendication 1 ou 2, **caractérisé en ce, que**
i. chaque corde de matériau (A ; B) consiste de jusqu'à six cordes individuelles (A1, A2 ou B1, B2, respectivement)
ii. au moins une corde individuelle (A1 ou B1, respectivement) de chaque corde de matériau (A ou B, respectivement) passe les points de croisement sans changement de direction,
iii. pendant qu'au moins une corde individuelle (A2 ou B2, respectivement) de chaque corde de matériau (A ou B, respectivement) change dans ce point de croisement sa direction du mouvement et est fusionnée avec une corde individuelle (B1 ou A1, respectivement) de l'autre corde de matériau (B ou A, respectivement) qui a passée un point de croisement précédent sans changement de direction.

5. Réseau maillé selon la revendication 4, **caractérisé en ce, que** dans chaque point de croisement subséquent la corde individuelle (A1 ou B1, respectivement), qui a passée un point de croisement précédent sans changement de direction change son sens de mouvement dans chaque point de croisement subséquent et est fusionnée avec une corde individuelle, qui a changée son sens de mouvement dans un point de croisement précédent.

6. Réseau maillé selon revendication 1 ou 4, **caractérisé en ce, que** dans la position de repos les cordes de matériau (A, B) se croisent dans les points de croisement sous un angle entre 15° et 90°.

7. Réseau maillé selon la revendication 4, **caractérisé en ce, que** chaque corde individuelle (A1, A2, B1, B2) est composée de plusieurs fils individuelle, qui sont, particulièrement, câblés, tissées, retordus ou, en grande partie, groupés en parallèles.

8. Réseau maillé selon la revendication 4, **caractérisé en ce, que** les cordes individuelles (A1, A2, B1, B2) contiennent fils, paquets de fils, torons de fils câblés en matériau d'acier ou d'aluminium.

9. Réseau maillé selon la revendication 4, **caractérisé en ce qu'**il contient éléments de protection pour la fixation soigneuse des fibres aux surfaces de talus à protéger avec des éléments de serrage et/ou des armatures de barres.

10. Réseau maillé selon la revendication 4, **caractérisé en ce qu'**il contient points de croisement qui sont collés.

11. Réseau maillé selon la revendication 4, **caractérisé en ce qu'**il a une structure de tissage tricoté.
